# EUROPEAN PATENT APPLICATION

(11) **EP 4 411 621 A1**
(43) Date of publication of application: **07.08.2024**
(21) Application number: 24156081.2
(22) Date of filing: 06.02.2024
(51) Int. Cl.: G06Q 30/0645, G06Q 10/087, G07F 17/00, G07C 9/00

(54) **METHOD OF OPERATING AN AUTONOMOUS SALES OR RENTAL STORE**

(30) Priority: 06.02.2023 NL 2034094
(71) Applicant: J. de Jonge Beheer B.V., 3134 KG Vlaardingen (NL)
(72) Inventor: DE JONGE, Jan, 3134 KG VLAARDINGEN (NL); VAN DE RIJZEN, Sung Dae Leonardus Andreas Maria, 3134 KG VLAARDINGEN (NL)
(74) Representative: EP&C

(57) **Abstract**

A method of operating an autonomous store, for example an autonomous rental store, comprising the steps of:
- processing an access request from a user, by which access to the store is requested,
- if access to the store is granted, sending an access token to the user,
- reading the access token with the access identifier,
- unlocking the outer door with the access identifier,
- locking, after the user has accessed the entry compartment, the outer door and unlocking the inner door,
- allowing the user to collect articles in the article compartment and to bring the collected articles into the entry compartment,
- detecting the articles that are brought in the entry compartment,
- requesting the user to confirm that the detected articles are brought in the entry compartment,
- if confirmation is received, locking the inner door and unlocking the outer door, and
- sending a transaction confirmation to the user.

## Description

### Field of the invention

The present invention relates to a method of operating an autonomous store, for example of operating an autonomous rental store. The present invention further relates to an autonomous store for carrying out such a method.

### State of the art

At present, it is becoming more popular to rent equipment, instead of buying it. This reduces overhead costs for tenants, e.g. contractors, because tools do not need to be owned, but can rather be rented at the time they are needed to perform certain tasks. The rental of equipment offers an improved flexibility for contractors and may reduce costs.

Rental of equipment typically takes place via rental agencies that have warehouses where equipment can be picked up, or equipment can be delivered on-site. This has the drawback that a delay occurs between the moment a rental request is made by a tenant and the moment at which the equipment is deployable.

In the past, several on-site rental facilities were proposed, for example known from US patent applications US 2003/125961 A1 (US'961) and US 2004/122688 A1 (US'688). These prior art rental facilities date from before the digital era and, although being mentioned to operate autonomously, are merely automated versions of existing human-operated warehouses. This means that a reservation request must be made and that the reserved articles are placed in a dedicated secured areas that open when the user enters the facility.

In these known rental facilities, an ID-check is carried out before a user is granted access to the facility, to make sure the right secured area is opened. Furthermore, the transaction is finalized by payment for the rental of the equipment, which means that the exit doors remain closed in the absence of payment and that the equipment cannot be removed from the facility.

These known rental facilities thereby have the drawback of operating in a complicated manner, for example requiring users to show their ID and requiring checking thereof before granting access. Furthermore, the obligation to make a reservation request might be a further drawback, because the user must decide up front, before being granted access to the facility, which exact piece of equipment will be rented. Thirdly, the direct payment is not desirable for business-to-business transactions, as those generally require payment afterwards, through dedicated invoices. Finally, the payment on exit requires that the rental period must be known up front, to determine the required sum that is to be paid. This reduces flexibility for the contractors, since they are bound to a pre-set return date.

Furthermore, US 2010/277277 A1 (US'277) discloses a mobile tool facility with an interior for holding items that can be rented out to users and that can be returned into the facility after usage. The facility in US'277 is intended for use by known users, so users that are able to present and identify themselves as being employees of a firm or contractors, which identifying may take place by means of an RFID ID-card. This known facility and method of operation thus has the drawback that only known users are able to enter the facility, whereas it would be more attractive if all sorts of users are able to enter such a facility.

WO 2022/174291 A1 (WO'291) discloses a product distribution system for dry-cleaning purposes, which comprises a storage area for holding cleaned clothes, an entry section for users to collect their clothes and a discharging section at an opposed end for handing in clothes that require cleaning. The clothes are equipped with RFID tags to allow monitoring which clothes are removed and returned. Apart from the fact that such a dry-cleaning warehouse is no autonomous store, also here, the system is directed at use by known users, which means that unknown users are not able to use this system.

### Object of the invention

It is therefore an object of the invention to provide an that offers an improved flexibility, or at least to provide an alternative autonomous store.

### Detailed description

The present invention provides a method of operating an autonomous store, for example of operating an autonomous rental store, the autonomous store comprising:
○ an article compartment for holding articles that are to be sold or rented,
○ an entry compartment, separated from the article compartment by a lockable inner door, and
○ an access assembly, comprising a lockable outer door for providing access to the entry compartment from outside the store and an access identifier for selectively unlocking the outer door for authorized users.

The autonomous store that is operated with the present method may be a rental store, in which articles can be collected by users and returned after usage, but may not be necessarily limited thereto. Alternatively, the autonomous store may be intended for the selling of articles, whereby the articles become owned by the users. Furthermore, the autonomous store may as well be a hybrid, containing articles that can both be sold or rented, depending on the request from the user.

In the present store, all articles are held in the article compartment and are all accessible for a user that is granted access. This means that a user can choose between any of the articles arranged in the article compartment, without requiring the user to choose or reserve one or more articles up front.

Furthermore, the store comprises an entry compartment that is separated from the article compartment through the inner door. The entry compartment is also closed-off from outside the store by means of the outer door. The outer door can be opened for authorized users, so that the users can enter the entry compartment. The inner door may remain closed when the outer door is opened, or vice versa, to prevent a direct access into the article compartment from outside the store. The entry compartment may thereby act as a lock. In addition, an emergency exit may be present in the article compartment, which can be opened in case of an emergency, to allow users to escape from the article compartment directly outside the store.

The present store may contain a single entry compartment, but may also comprise multiple entry compartments, each having its own inner door, outer door and access assembly. The multiple entry compartments may allow multiple users, i.e. a number of users corresponding to the number of entry compartments, to enter the article compartment simultaneously, each via its own entry compartment.

The store may further comprise a remote monitoring system, for example comprising a camera system with camera's inside the article compartment, the entry compartment and outside the store. Furthermore, the monitoring system may include a human supervisor that is able to communicate with the user inside the store, to act as a helpdesk in case any problems might occur.

The method according to the present invention comprises the steps of:
- processing an access request from a user, by which access to the store is requested,
- if access to the store is granted, assigning an access token to the user,
- reading the access token with the access identifier,
- unlocking the outer door with the access identifier,
- locking, after the user has accessed the entry compartment, the outer door and unlocking the inner door,
- allowing the user to collect articles in the article compartment and to bring the collected articles into the entry compartment,
- detecting the articles that are brought in the entry compartment,
- requesting the user to confirm that the detected articles are brought in the entry compartment,
- if confirmation is received, locking the inner door and unlocking the outer door, and
- sending a transaction confirmation to the user.

The present method relates to a method of operating the autonomous store, where at least some of the steps may be performed by the store itself and where some steps may be performed externally, for example through an online platform. This may offer the benefit that a user can interact with the store remotely, through the online platform, for example via an app on its smartphone.

The sale or rental transaction may be started by a user making the access request. The access request can be made remotely, whereby the user may present himself through the app or online platform. This may establish communication between the user and the store, either directly or indirectly, so that the user can be authorized to obtain access to the store. If such access is granted, an access token is assigned to the user. The access request made by a user and the assigning of an access token are important differences with the known store, for example with the mobile tool facility in US'277, since it does not require users to be known and to have their ID stored. Instead, the user can be assigned an access token on the spot in an autonomous manner, thus allowing users to also enter the store that were previously unknown. The same holds true for WO'291, where users need to be known to be known to the system and where the system collects and distributes products, i.e. clothes that are actually owned by the users, instead of article that are sold or rented by the operator of the store.

The access token may comprise any means that enable the identity of the user to be verified, prior to entry in the store. For example, the user's bank or credit card may be used as access token. Likewise, the access token may be a digital token, that is presentable on the user's smartphone, or may be a biometric token, for example a fingerprint of the user. As a further alternative, the user's identification documents, for example a driver's license or ID card, may be used as access token as well. This differs from the prior art, because the document itself is the access token, so that it is not needed to read any of the user's personal data upon presentation at the store.

The user is then free to go to the autonomous store at any suitable time, because no special reservations or the like need to be prepared for the user, because the user can potentially obtain any of the articles in the article compartment. Upon arrival at the store, the user must present the access token to the access identifier, which then verifies whether the access token is correct. If so, the outer door is opened so that the user can enter the entry compartment of the store.

Upon entry of the user into the entry compartment, the inner door remains locked, until the outer door is closed. Then, the outer door is locked and the inner door is unlocked so that the user can enter the article compartment. At this moment, the user cannot the leave the store until the transaction has been completed, to prevent the user from taking away articles without registration thereof or payment.

Once inside the article compartment, the user can take all articles that he/she would like to buy or rent. A reservation beforehand is not needed, which improves the flexibility, since the user can make a decision about the articles on the spot, even having the chance to take a look at the articles or allowing the user to test the articles.

In an embodiment of the method, it could be possible to make reservations for certain articles. Those reserved articles may be marked inside the article compartment, for example being marked visually, e.g. by a warning light, to prevent those articles from being taken by users that did not make a reservation. Instead, if the user that made the reservation enters the article compartment, a different marker may be applied, for example a different visual marker. For example, each of the articles may be associated with a warning light, which warning light can emit light with a red colour in case the corresponding article is reserved and which can emit light with a green colour in case the corresponding article is free to be taken.

Furthermore, the method may comprise the step of guiding the user through the article compartment when he/she searches for a specific article. Especially in big article compartments, it might be difficult to find the right articles. With the guiding, the user may find the right articles more easily. The guiding of the user may, for example, be done by means of instructions in the store, for example by optical signals, such as lights, or through the user's smartphone.

After making its selection for the articles, the user must bring the articles into the entry compartment. The articles are detected upon entry in the entry compartment, so that the store is able to determine which articles are taken out of the article compartment. The detecting of articles entering the entry compartment, opposed to prior art facilities that relied on multiple different scanners to detect whether articles are taken from shelves, can improve reliability, since possible errors, for example when a user returns the articles to the shelves, can be avoided.

After bringing the articles into the entry compartment, the user may indicate, for example by pushing a button on a control panel of the store, that he/she has finished taking articles from the article compartment. The user is thereby presented with an overview of the articles that have been detected when brought out of the article compartment and into the entry compartment. Prior to leaving the entry compartment, the user must confirm that the overview corresponds to the actual articles that he/she has taken.

This is an important step, since this mandatory confirmation implies that the responsibility for the articles shifts from the store towards the user. Should any dispute arise about which articles are sold or rented, the operator of the autonomous store has evidence that the user agreed about the articles. The same applies when a problem would arise with the articles, since the confirmation by the user causes the responsibility to lie with the user, having given agreement about the articles.

This confirmation step forms an important difference with respect to known stores, such as the mobile tool facility in US'277, since those simply checked which items were taken by a user. This may be acceptable for known users of the facility, such as the employees or contractors disclosed in US'277, since that will generally trigger an invoice being sent to the employer. However, since the present store is able to be used by unknown users, no such contractual obligations will apply. Instead, the confirmation requested and granted replaces other agreements and ensures that users have accepted the transaction in a legal manner. Also WO'291 fails to disclose such a confirmation step, since the articles, i.e. clothes, are owned by the users and no confirmation would be required.

The confirmation by the user may further involve a confirmation about the state of the articles, for example confirmation that all articles are in working condition. This may give the benefit that any malfunction of the article after selling or renting thereof, falls within the responsibility of the user.

After the confirmation was given by the user, the inner door is locked so that the user cannot enter the article compartment after the transaction was finalized. Furthermore, the outer door is unlocked, so that the user can leave the store with the articles.

As a final step, a confirmation of the transaction is sent to the user, for example to the smartphone that is used to present the access token. With the transaction information, the user can be informed once more about the articles that have been sold or rented, for example combined with an overview of the transaction date and time.

The present method and autonomous store may provide the benefit that the selling or renting of articles can be established in a much more flexible manner. No complicated ID checks are needed before granting access to the store. Instead, the user would only need to send an access request, after which the access token is assigned. At the entrance of the store, only the access token needs to be presented, without requiring further identification, because the possession of the access token would already confirm authorisation for that user to enter the store.

Furthermore, the present invention provides the benefit that the user can decide on the spot, i.e. when inside the article compartment of the store, about which articles are to be sold or rented. This also offers improved flexibility, because it is no longer mandatory for a user to make a reservation for certain articles and for an operator of the store to prepare the right articles for each user in a respective dedicated compartment.

Thirdly, the present invention does not require payment to finalize the transaction in the store. In the prior art, this was needed before a user could exit the store, but the present invention only requires confirmation by the user about which articles are taken from the article compartment. This confirmation thus replaces the payment and allows users to pay afterwards.

This may be especially beneficial where articles are rented, since the height of the overall rental fee is, amongst others, determined by a rental duration. The rental duration can only be determined upon return of the articles, which means that the present invention would allow the overall rental fee to be billed upon return of the articles.

Finally, the present invention can prevent undesired disputes about the transaction, because the user has to give confirmation prior to exiting the store. By giving its confirmation, the responsibility shifts towards the users, which reduces liability of the operator of the autonomous store.

In an embodiment, the access request comprises data of the user, for example employer data and/or billing data. Together with the access request, which already enables tracking of the user, for example through the smartphone that is used to send the access request, the user should hereby provide further data that enables contacting.

For example, it may be indicated that the user of the autonomous store is employed by a certain company that thereby becomes responsible for the transaction, and/or a billing address may be included, to which the invoice of the transaction can be sent afterwards.

In an embodiment, the assigning of an access token comprises sending a digital access token to the user. This embodiment provides that, if access is granted, a digital access token is forwarded to the user, for example to the smartphone that is used to make the access request. This may be more convenient, compared to when the access token were a physical object.

In a further embodiment, the digital access token is a QR-code. Such a QR-code may be forwarded conveniently towards a user through email or a smartphone app and may allow for convenient presentation by the user, for example by display on a smartphone screen.

Alternatively, however, the digital access token may comprise a code that can be entered into the access identifier or may be a visual token. As a further alternative, the digital access token may comprise an NFC signal that can be emitted via a smartphone, wherein the access identifier may comprise an NFC reader, capable of reading the NFC signal.

In an embodiment the access identifier comprises a camera device for reading the access token, e.g. the QR-code. The digital access token may thereby be provided as a visual token, for example a digital image presented by the user on its smartphone, which image is detectable by the camera device.

In an embodiment, the access request comprises a reservation request for a certain article, and the method further comprises the step of reserving that certain article in the article compartment. According to this embodiment, the user may reserve one or more articles when making the access request. These articles can be visually marked in the article compartment, for example by means of coloured lights, to indicate whether that article is reserved or not.

The option of making reservations may be a benefit for users, ensuring them that their desired article is available. The user who made the reservation is then entitled to take the reserved article from the store, whereas the store may be configured to prevent other users from taking this article. If it is, for example, detected that an unauthorized user takes a reserved article into the entry compartment, a warning may be issued to force the unauthorized user to return the reserved article. Additionally, in such a situation, the store may prevent opening of the outer door to prevent the unauthorized user from taking the reserved article out of the store.

In an embodiment, the articles are provided with unique radiofrequency identity (RFID) tags, and the step of detecting the articles comprises detecting the RFID tags with an RFID detector.

Each type of article, or even each individual article, may be provided with its own RFID tag. This allows each article to be detected upon passing the RFID detector, when the article is taken into the entry compartment by the user. RFID tags may offer the benefit that they can be applied to the articles relatively easily, for example by adhering them to the articles as a sticker.

In a further embodiment, the RFID-detector is arranged in close proximity to the inner door. This may offer the benefit that only a single detector at the inner door may be sufficient to detect all articles that are taken into the entry compartment, opposed to prior art facilities that relied on multiple different scanners to detect whether articles are taken from shelves. Instead, the detecting of articles entering the entry compartment is much more reliable, since possible errors, for example when a user returns the articles to the shelves, can be avoided.

In an embodiment, the store comprises multiple entry compartments. Accordingly, multiple users, i.e. a number of users corresponding to the number of entry compartments, can be allowed to enter the article compartment simultaneously, each via its own entry compartment. Each of the entry compartments thereby has its own inner door, outer door and access assembly.

Each of the entry compartments may be provided with a detector so that it can detected for each entry compartment individually which articles are brought therein. A single entry compartment is assigned to each individual user, so that the detected articles can be coupled to the user's account, thereby ensuring that all transactions are correct for each user, even though they were in the article compartment simultaneously.

Alternatively, multiple users can be granted access to the article compartment through a single entry compartment. However, this would require each user to present himself/herself when returning in the entry compartment with the articles, so that the detected articles are assigned to the right user. To this effect, the control panel in the entry compartment may be provided with an identifier as well, where the user can present its access token for identification.

In an embodiment, the step of requesting confirmation comprises:
- presenting an overview of the detected articles, and
- requesting the user to confirm whether the detected articles in the overview correspond to the articles that are brought in the entry compartment.

According to this embodiment, an overview of the detected articles is presented to the user first. This serves the purpose of informing the user about which articles are detected when brought in the entry compartment. Should the user not agree with these detected articles, for example in case he/she attempted to remove an article without detection, the user is given the chance to return any article that is not desired by him/her, since the inner door towards the article compartment remains unlocked. The return of articles may be detected by the detector, i.e. the RFID detector, which may effect a change in the article overview.

The presenting of the overview of detected articles may comprise presenting images of the detected articles, allowing the user to quickly see whether these articles have been detected correctly. Alternatively, the presenting may involve presenting a list with article names or article categories of the detected articles. Such an overview may be presented on a screen inside the entry compartment, and/or may involve printing the overview on paper to be taken away by the user.

Furthermore, the presenting may include an overview of the total costs for renting or buying the detected articles. This may have a practical benefit to allow a user to decide whether this sum is acceptable to him or her.

Finally, the presenting may also include information about a state, for example the technical state and/or working life of the detected articles. This allows that possible damages to the products that are to be rented can be shown to the user, in order to let him or her decide whether they still want to pursue the transaction and to ensure that a user cannot complain afterwards that they were not aware of damages.

After having reviewed the article overview, the user must confirm that the articles in the overview correctly correspond to the articles that are actually brought in the entry compartment. Only after confirmation, the transaction can be finished, since the responsibility for the correctness of the transaction comes to lie with the user after confirmation. Only after confirmation, the inner door is locked and the outer door is unlocked, to allow exit of the user with his/her articles.

The confirmation by the user may involve a physical interaction of the user, for example pressing of a button or the screen in the entry compartment. This may prevent users from confirming the presented overview of detected articles too soon and rather enables them to closely review the transaction.

In an embodiment, the method further comprises the step of detecting whether return articles are brought in the entry compartment by the user from outside the store. This embodiment may especially be useful where the autonomous store is a rental store, in which articles are rented out, so where they remain property of the rental store operator.

A rental transaction is generally finished when the article is returned, so that the overall rental period can be established. Until return of the article, no payment order may yet be sent to the user.

When the user returns its article, the presence of that article may either be detected when the user enters the entry compartment, for example by means of a detector arranged inside the entry compartment. Alternatively, the returned articles may be detected when the user brings them from the entry compartment into the article compartment, for example by means of the same detector used for detecting articles that are taken from the article compartment.

According to this embodiment, the store may comprise a dedicated return area, where returned articles can be left. This may allow for inspection and approval of the returned articles, for example where the articles are power tools. Alternatively, the user may be requested to return the articles between all other articles, for example on the shelves, enabling them to be rented by subsequent users.

In a further embodiment, the method further comprises the step of sending return receipt, such as a return confirmation to the user. Based on the return receipt, the responsibility for the returned article comes back to the rental store operator. However, the returning of articles may additionally involve a scanning step for examining the state of the article, for example to detect damage or malfunction, which must have been caused under the responsibility of the user.

In an embodiment, the method further comprises the step of requesting a return confirmation from the user, which step comprises requesting the user to indicate a technical state in which the detected articles are returned.

According to this embodiment, the user is invited to indicate whether the returned articles are in good working order or whether this is not the case. Such malfunctioning of the articles may be caused by wear, damaging or technical fault. A user may, in the case of malfunctioning, be requested to indicate a cause of the malfunctioning. This may provide that a user is offered to chance to acknowledge possible damages. Additionally, the user may be presented with an adjusted cost overview including the damages etc., which may have triggered additional fees on top of the regular rental fees.

As an alternative, the returning of articles may be done in a store different from the one where the articles were rented, or even in dedicated return facilities. This may offer even more flexibility for the user, not being bound to a single return point. However, the other stores or the return points may be connected to the same online platform as the store from where the article was rented, so that the rental transaction can be finished.

In an embodiment, the method further comprises the step of sending a payment request, for example an invoice, to the user. The payment request may, for example, be sent after a rental article is returned to the store. Alternatively, the payment request may not be sent directly after the transaction, but instead an accumulated payment request may be sent after a certain period of time has elapsed, for example every month.

In an embodiment, digital communication between the store and the user is carried out via an online platform, and the transaction confirmation and, if any, the access token are sent from the online platform. The online platform may for example comprise an app that can be executed on the user's smartphone, so that the user can interact with the platform via its smartphone.

According to a second aspect, the present invention provides an autonomous store, for example an autonomous rental store, for carrying out the operating method according to any of the preceding claims, the store comprising:
- an article compartment for holding articles that are to be sold or rented,
- an entry compartment, separated from the article compartment by a lockable inner door, and
- an access assembly, comprising a lockable outer door for providing access to the entry compartment and an access identifier for selectively unlocking the outer door for authorized users.

The autonomous store according to the present invention may comprise one or more of the features and/or benefits disclosed herein in relation to the operating method according to the present invention, in particular as recited in the appended claims.

The autonomous store according to the present invention may be a rental store, in which articles can be collected by users and returned after usage, but may not be necessarily limited thereto. Alternatively, the autonomous store may be intended for the selling of articles, whereby the articles become owned by the users. Furthermore, the autonomous store may as well be a hybrid, containing articles that can both be sold or rented, depending on the request from the user.

In the present store, all articles are held in the article compartment and are all accessible for a user that is granted access. This means that a user can choose between any of the articles arranged in the article compartment, without requiring the user to choose one or more articles up front.

Furthermore, the store comprises an entry compartment that is separated from the article compartment through the inner door. The entry compartment is also closed-off from outside the store by means of the outer door. The outer door can be opened for authorized users, so that the users can enter the entry compartment. The inner door may remain closed when the outer door is opened, or vice versa, to prevent a direct access into the article compartment from outside the store. The entry compartment may thereby act as a lock. In addition, an emergency exit may be present in the article compartment, which can be opened in case of an emergency, to allow users to escape from the article compartment directly outside the store.

The present store may contain a single entry compartment, but may also comprise multiple entry compartments, each having its own inner door, outer door and access assembly. The multiple entry compartments may allow multiple users, i.e. a number of users corresponding to the number of entry compartments, to enter the article compartment simultaneously, each via its own entry compartment.

The store may further comprise a remote monitoring system, for example comprising a camera system with camera's inside the article compartment, the entry compartment and outside the store. Furthermore, the monitoring system may include a human supervisor that is able to communicate with the user inside the store, to act as a helpdesk in case any problems might occur.

### Brief description of drawings

Further characteristics of the invention will be explained below, with reference to embodiments, which are displayed in the appended drawings, in which:
Figures 1A - 1H schematically depict the steps of an embodiment of the operating method according to the present invention,
Figure 2 schematically depicts an embodiment of the autonomous store according to the present invention, having two entry compartments, and
Figures 3A and 3B schematically depict two embodiments of an autonomous rental store according to the present invention.

Throughout the figures, the same reference numerals are used to refer to corresponding components or to components that have a corresponding function.

### Detailed description of embodiments

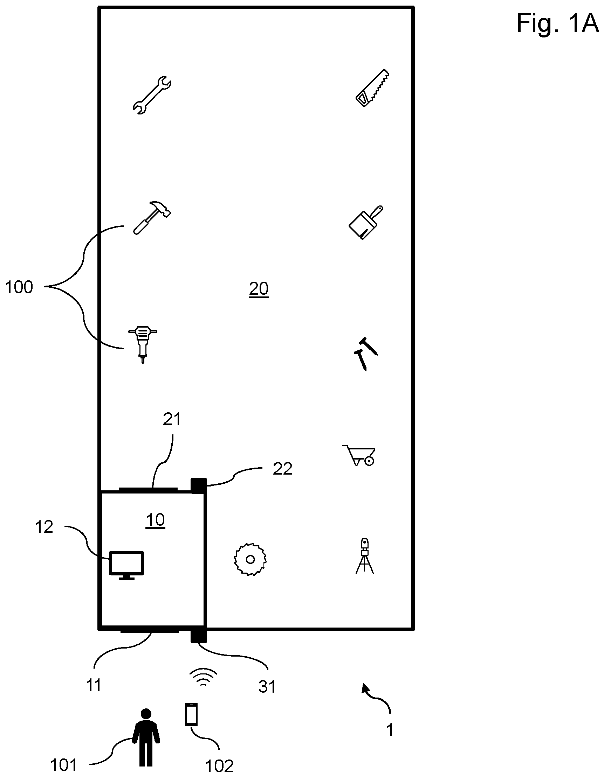

Figure 1A schematically shows an embodiment of the autonomous store according to the invention, to which is referred with reference numeral 1. The autonomous store 1 comprises an article compartment 20 for holding articles 100 that are to be sold or rented. In the present embodiment, the articles 100 concern tools and construction supplies, but the present store 1 may in general contain any type of articles.

The store 1 further comprises an entry compartment 10, separated from the article compartment 20 by a lockable inner door 21, and an access assembly, comprising a lockable outer door 11 for providing access to the entry compartment 10 from outside the store 1 and an access identifier 31 for selectively unlocking the outer door 11 for authorized users 101.

In the present store 1, all articles 100 are held in the article compartment 20 and are all accessible for a user 101 that is granted access. This means that a user 101 can choose between any of the articles 100 arranged in the article compartment 20, without requiring the user 101 to choose or reserve one or more articles 100 up front.

Figures 1A - 1H depict steps of an embodiment of a method of operating the autonomous store 1, where at least some of the steps may be performed by the store 1 itself and where some steps may be performed externally, for example through an online platform. This may offer the benefit that a user 101 can interact with the store 1 remotely, through the online platform, for example via an app on its smartphone 102.

The sale or rental transaction is started by the user 101 making the access request, which is done remotely via the app on its smartphone 102, as is shown schematically in figure 1A. This establishes communication between the user 101 and the store 1, so that the user 101 can be authorized to obtain access to the store 1. If such access is granted, an access token is assigned to the user 101, which enables the identity of the user 101 to be verified, prior to entry in the store 1. In the present embodiment, the access token is assigned by sending a digital access token to the smartphone 102 of the user 101. The digital access token 102 is sent as a QR-code, which can be presented by the user 101 on the screen on its smartphone 102. The access identifier 31 of the store 1 comprises a camera device for reading the QR-code on the smartphone 102 screen.

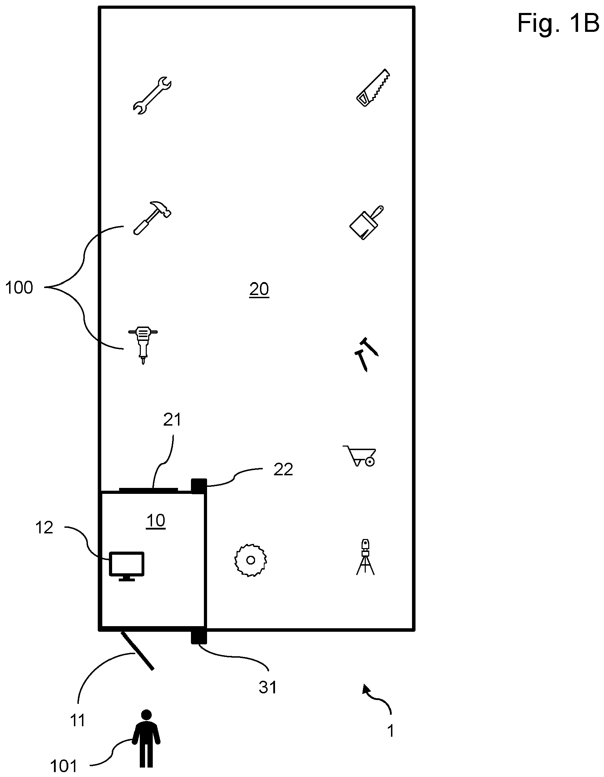

The user 101 is free to go to the autonomous store 1 at any suitable time. Upon arrival at the store 1, the user must present the QR-code to the access identifier 31, which then verifies whether the QR-code is correct. If so, the outer door 11 is opened so that the user 101 can enter the entry compartment 10 of the store 1, as is shown in figure 1B.

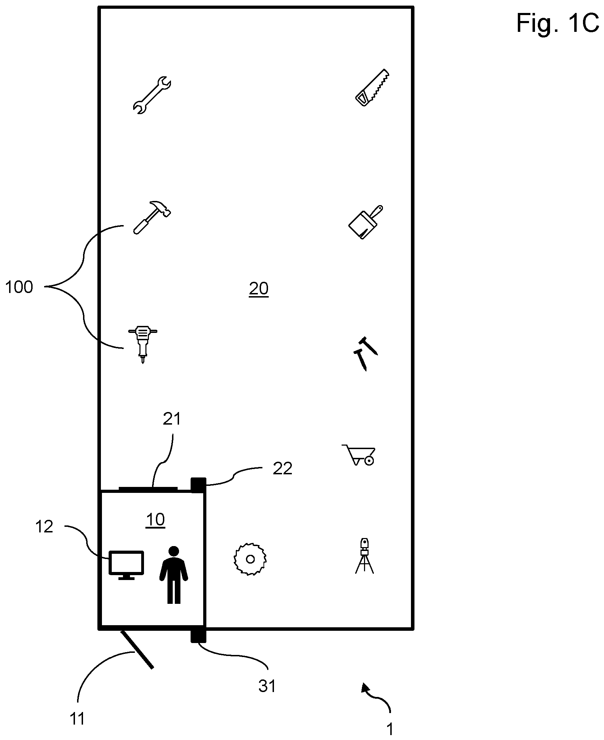

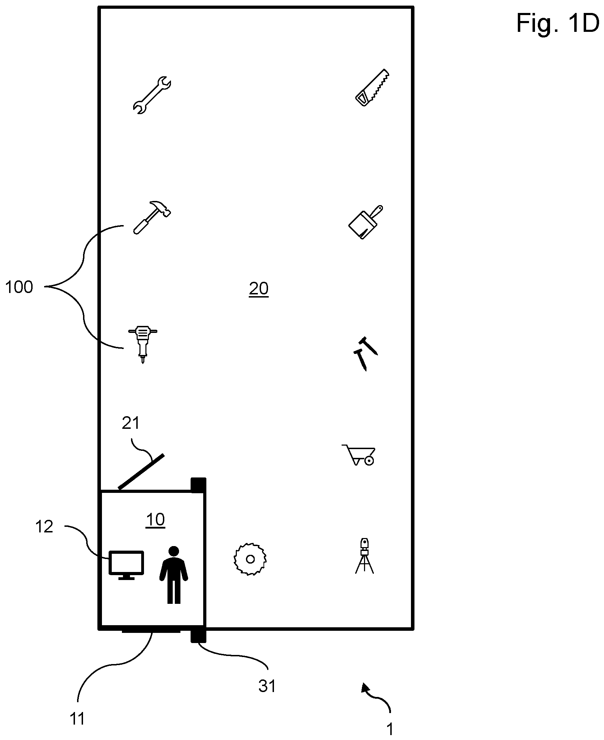

Upon entry of the user 101 into the entry compartment 10, the inner door 21 remains locked, until the outer door 11 is closed, shown in figures 1C and 1D. Then, the outer door 11 is locked and the inner door 21 is unlocked so that the user 101 can enter the article compartment 20. At this moment, the user 101 cannot the leave the store 1 until the transaction has been completed, to prevent the user 101 from taking away articles 100 without registration thereof or payment.

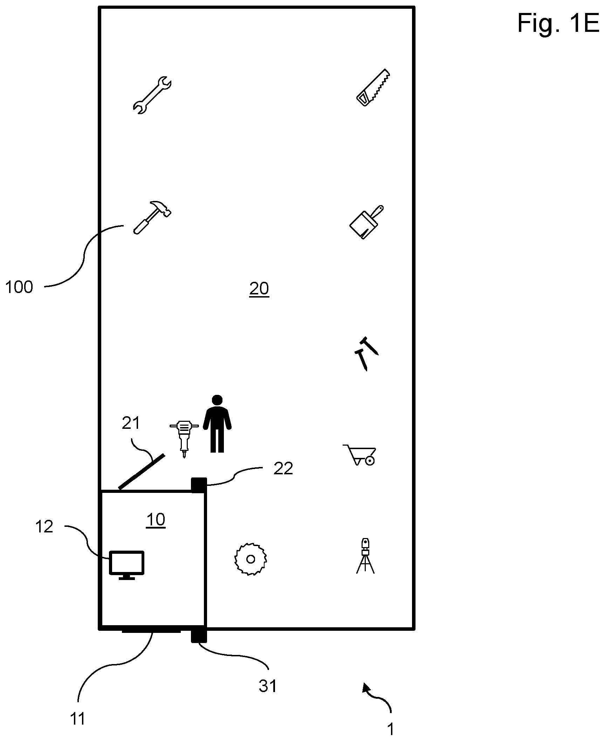

Once inside the article compartment 20, shown in figure 1E, the user 101 can take all articles 100 that he/she would like to buy or rent. A reservation beforehand is not needed, so that the user 101 can make a decision about the articles 100 on the spot.

After making its selection for the articles 100, the user 101 must bring the articles 100 into the entry compartment 10. In the present embodiment, shown in the step in figure 1E, the user 101 has decided to take a jackhammer. The jackhammer is detected upon entry in the entry compartment 10, after passing a detector 22, so that the store 1 is able to determine that the jackhammer is taken out of the article compartment 20.

All articles 100 are provided with unique radiofrequency identity (RFID) tags, and the detecting of the articles 100 comprises detecting the RFID tags with the detector being an RFID detector 22. This allows each article 100 to be detected upon passing the RFID detector 22, when the article 100 is taken into the entry compartment 10 by the user 101. The RFID-detector 22 is arranged in close proximity to the inner door 21. This may allow that only a single detector 22 at the inner door 21 is sufficient to detect all articles 100 that are taken into the entry compartment 10.

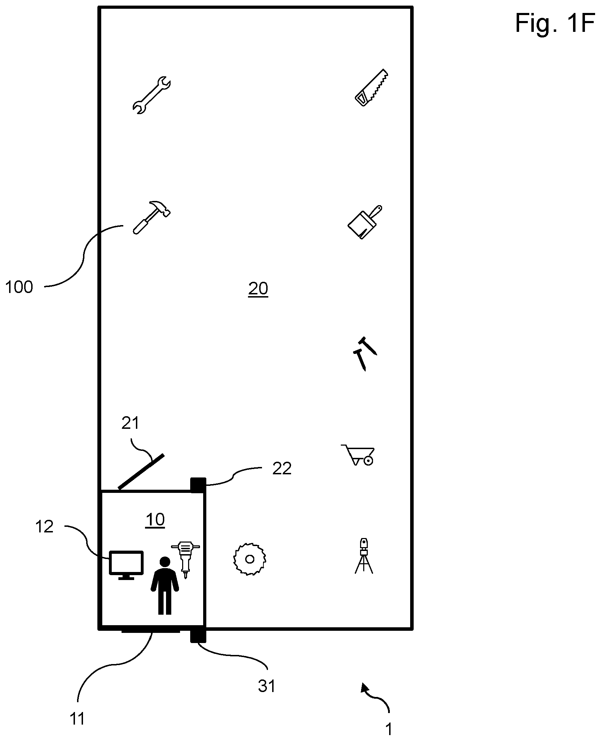

After bringing the article 100 into the entry compartment 10, shown in figure 1F, the user 101 indicates, by pushing a button on a control panel 12 of the store 1, that he/she has finished taking articles 100 from the article compartment 20. Prior to leaving the entry compartment 10, the user 101 must give confirmation on the actual articles 100 that he/she has taken. The user 101 is thereby presented with an overview of the articles 100 that have been detected by the RFID detector 22 when brought out of the article compartment 20 and into the entry compartment 10. This serves the purpose of informing the user 101. Should the user 101 not agree with these detected articles 100, the user 101 is given the chance to return any article that is not desired by him/her, since the inner door 21 towards the article compartment 20 remains unlocked. The return of articles 100 may be detected by the RFID detector 22, which may effect a change in the article overview. After having reviewed the article overview, the user 101 must confirm that the articles 100 in the overview correctly correspond to the articles 100 that are actually brought in the entry compartment 10. Only after confirmation, the transaction can be finished, since the responsibility for the correctness of the transaction comes to lie with the user 101 after confirmation.

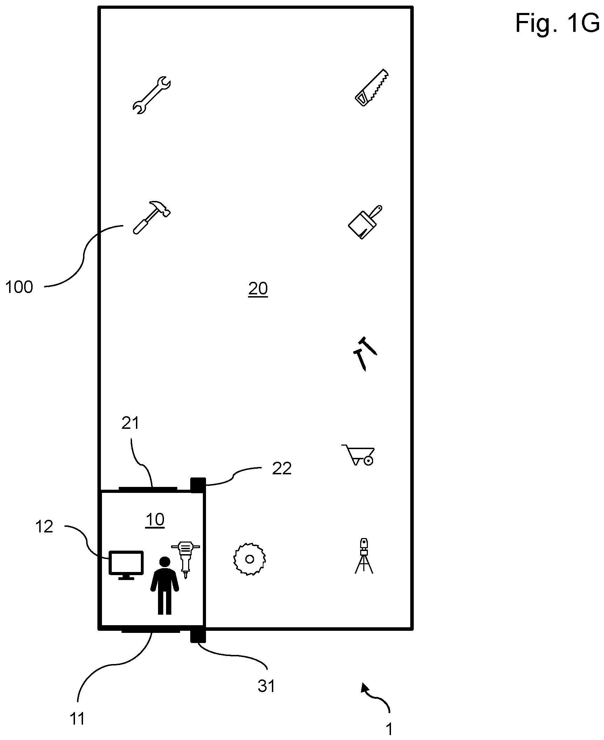

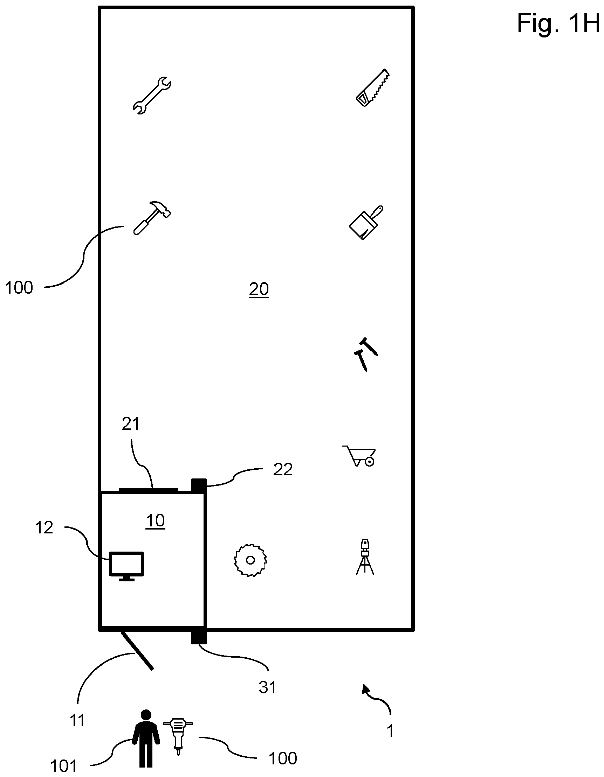

After the confirmation was given by the user 101, the inner door 21 is locked so that the user 101 can no longer enter the article compartment 20, as is shown in figure 1G. Furthermore, the outer door 11 is unlocked, so that the user 101 can leave the store 1 with the articles 100, as shown in figure 1H.

As a final step, a confirmation of the transaction is sent to the user 101, for example to the smartphone 102 that is used to present the QR-code. With the transaction information, the user 101 can be informed once more about the articles 100 that have been sold or rented, for example combined with an overview of the transaction date and time.

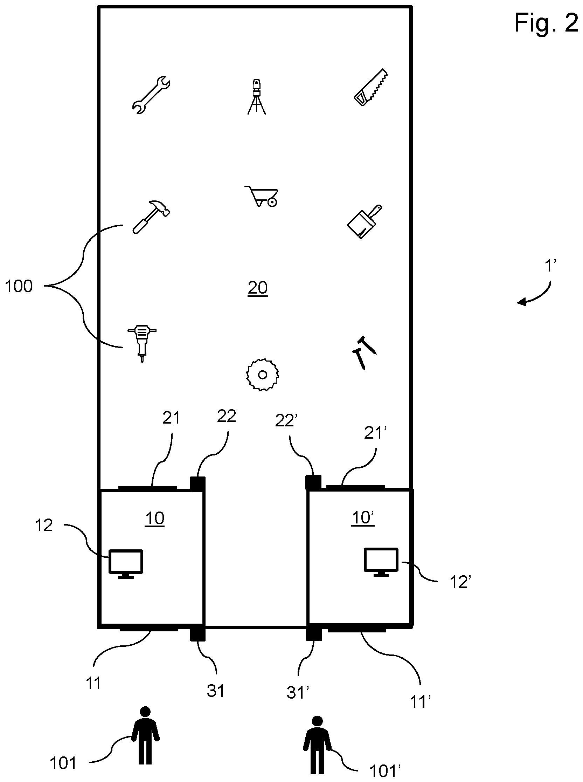

Figure 2 depicts an alternative embodiment of the store 1', in which the store 1' comprises multiple, e.g. two entry compartments 10, 10'. Accordingly, multiple users 101, 101', i.e. a number of users 101 corresponding to the number of entry compartments 10, can be allowed to enter the article compartment 20 simultaneously, each via its own entry compartment 10, 10'. Each of the entry compartments10, 10' thereby has its own inner door 21, 21', outer door 11, 11' and access assembly 31, 31'.

Each of the entry compartments 10, 10' is provided with an RFID-detector 22, 22' so that it can detected for each entry compartment 10, 10' individually which articles 100 are brought therein. A single entry compartment 10, 10' is assigned to each individual user 101, 101', so that the detected articles 100 can be coupled to the user's account, thereby ensuring that all transactions are correct for each user 101, 101', even though both users 101, 101' were in the article compartment 20 simultaneously.

Alternatively, for a store 1 having only a single entry compartment 10, multiple users 101, 101' can be granted access to the article compartment 20 when each user 101, 101' would present himself/herself when returning in the entry compartment 10 with the articles 100, so that the detected articles 100 are assigned to the right user 101, 101'. To this effect, the control panel 12 in the entry compartment 10 may be provided with an identifier as well, where the user can present its access token for identification.

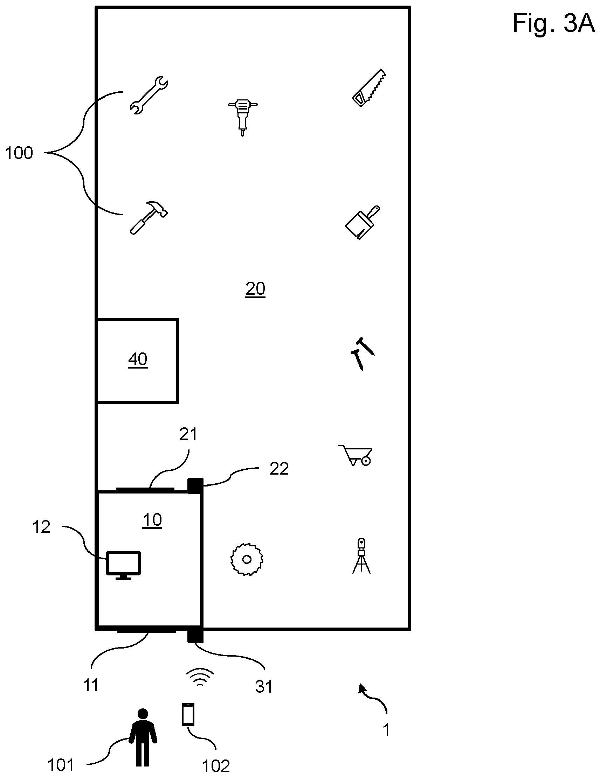

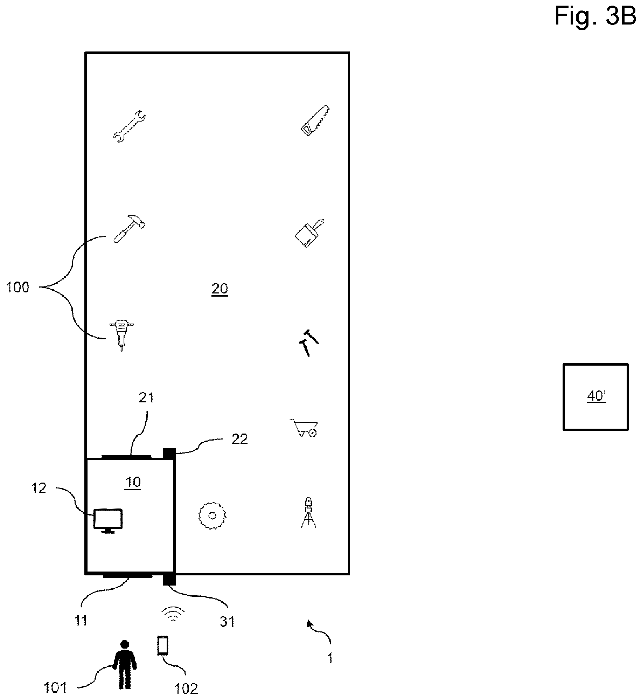

Figures 3A and 3B show alternative embodiments of the autonomous store 1, being embodied as a rental store, in which articles 100 can be collected by users 101 and returned after usage. To this effect, the store 1 may comprise a dedicated return area 40 in the article compartment 20, where returned articles 100 can be left, as is shown in the embodiment of figure 3A. This may allow for inspection and approval of the returned articles 100 by a human worker, prior to renting the articles 100 to new users. T

For a rental store, the present method further comprises the step of detecting whether return articles 100 are brought in the entry compartment 10 by the user 101 from outside the store 1. When the user 101 returns its article 100, the presence of that return article 100 is, in the present embodiment, detected when the user 101 brings them from the entry compartment 10 into the article compartment 20, by means of the same RFID detector 22 used for detecting articles 100 that are taken from the article compartment 20. The method thereby further comprises the step of sending a return receipt, such as a return confirmation to the user 101. The method further comprises the step of sending an invoice to the user 101. The invoice may, for example, be sent after a rental article 100 is returned to the store 1.

As an alternative, shown in the embodiment in figure 3B, the returning of articles 100 can be done in a dedicated return facility 40', separate and/or remote from the store 1. This may offer even more flexibility for the user 101, not being bound to a single return point in the store 1 itself.

## Claims

1. Method of operating an autonomous store, for example of operating an autonomous rental store, the autonomous store comprising:
∘ an article compartment for holding articles that are to be sold or rented,
∘ an entry compartment, separated from the article compartment by a lockable inner door, and
∘ an access assembly, comprising a lockable outer door for providing access to the entry compartment from outside the store and an access identifier for selectively unlocking the outer door for authorized users,
wherein the method comprises the steps of:
- processing an access request from a user, by which access to the store is requested,
- if access to the store is granted, assigning an access token to the user,
- reading the access token with the access identifier,
- unlocking the outer door with the access identifier,
- locking, after the user has accessed the entry compartment, the outer door and unlocking the inner door,
- allowing the user to collect articles in the article compartment and to bring the collected articles into the entry compartment,
- detecting the articles that are brought in the entry compartment,
- requesting the user to confirm that the detected articles are brought in the entry compartment,
- if confirmation is received, locking the inner door and unlocking the outer door, and
- sending a transaction confirmation to the user.

2. Method according to claim 1, wherein the access request comprises data of the user, for example employer data and/or billing data.

3. Method according to claim 1 or 2, wherein the assigning of an access token comprises sending a digital access token to the user.

4. Method according to claim 3, wherein the digital access token is a QR-code.

5. Method according to any of the preceding claims, wherein the access identifier comprises a camera device for reading the access token, e.g. the QR-code.

6. Method according to any of the preceding claims, wherein the access request comprises a reservation request for a certain article, and
wherein the method further comprises the step of reserving that certain article in the article compartment.

7. Method according to any of the preceding claims, wherein the articles are provided with unique radiofrequency identity (RFID) tags, and
wherein the step of detecting the articles comprises detecting the RFID tags with an RFID detector.

8. Method according to claim 7, wherein the RFID-detector is arranged in close proximity to the inner door.

9. Method according to any of the preceding claims, wherein the step of requesting confirmation comprises:
- presenting an overview of the detected articles, and
- requesting the user to confirm whether the detected articles in the overview correspond to the articles that are brought in the entry compartment.

10. Method according to claim 9, wherein the step of presenting comprises one or more of:
- presenting images of the detected articles,
- presenting a list with article names or article categories of the detected articles,
- presenting an overview of the total costs for renting or buying the detected articles, and/or
- presenting information about a state, for example the technical state and/or working life of the detected articles.

11. Method according to any of the preceding claims, further comprising the step of detecting whether return articles are brought in the entry compartment by the user from outside the store.

12. Method according to claim 11, further comprising the step of requesting a return confirmation from the user, which step comprises requesting the user to indicate a technical state in which the detected articles are returned.

13. Method according to any of the preceding claims, further comprising the step of sending a payment request, for example an invoice, to the user.

14. Method according to any of the preceding claims, wherein digital communication between the store and the user is carried out via an online platform, and
wherein the transaction confirmation and, if any, the access token are sent from the online platform.

15. Autonomous store, for example an autonomous rental store, for carrying out the operating method according to any of the preceding claims, the store comprising:
- an article compartment for holding articles that are to be sold or rented,
- an entry compartment, separated from the article compartment by a lockable inner door, and
- an access assembly, comprising a lockable outer door for providing access to the entry compartment and an access identifier for selectively unlocking the outer door for authorized users.
